# EUROPÄISCHE PATENTSCHRIFT

(11) **EP 1 003 146 B1**
(45) Veröffentlichungstag und Bekanntmachung des Hinweises auf die Patenterteilung: **19.05.2004**
(21) Anmeldenummer: 99122539.2
(22) Anmeldetag: 12.11.1999
(51) Int. Cl.: G09F 3/00, G06K 19/06

(54) **Verfahren zur Sicherung und Kennzeichnung von Produkten unter Verwendung von Mikropartikeln**
Method for identifying products by using microparticles
Méthode d'identification de produits par microparticules

(30) Priorität: 21.11.1998 DE 19853764
(43) Veröffentlichungstag der Anmeldung: 24.05.2000
(73) Patentinhaber: Simons Druck + Vertrieb Gmbh, 48301 Nottuln (DE)
(72) Erfinder: Simons, Rolf, 48301 Nottuln (DE)

(56) Entgegenhaltungen:
- DE-A- 2 651 528
- DE-A- 4 114 795
- DE-A- 19 709 694
- US-A- 4 390 452

## Beschreibung

Die vorliegende Erfindung betrifft ein Verfahren für die Sicherung und Kennzeichnung von Produkten unter Verwendung von am Produkt anzubringenden oder dem Produkt zuzugebenden Mikropartikeln mit jeweils mehreren, einen Code bildenden Farbschichten, wobei für jedes einzelne Produkt zwei oder mehr verschieden codierte Mikropartikel-Gruppen verwendet werden, wobei die erste Mikropartikel-Gruppe eine für eine Vielzahl von Produkten gleiche Information und die zweite oder weitere Mikropartikel-Gruppe eine für jedes einzelne Produkt oder für jeweils wenige Produkte individuelle Information enthält. Weiterhin betrifft die Erfindung eine Abwandlung des Verfahrens in ein reines Numerierungsverfahren.

Ein Verfahren der oben zuerst angegebenen Art ist aus der US-PS 4 390 452 bekannt. Dieser Schrift ist zu entnehmen, daß eine Substanz oder ein Objekt, allgemein also ein Produkt, mit zwei oder mehr verschieden codierten Mikropartikel-Gruppen versehen werden kann, beispielsweise mit einer ersten Mikropartikel-Gruppe, die den Hersteller identifiziert und einer zweiten Mikropartikel-Gruppe, die individuelle Produktionseinheiten identifiziert. Als erstes Beispiel wird hier ein Automobillack genannt, der mit einer ersten Mikropartikel-Gruppe, die die Lackfabrik kennzeichnet, und mit einer zweiten Mikropartikel-Gruppe, die den Tag oder die Woche der Lackherstellung angibt, gekennzeichnet werden kann. Als zweites Beispiel werden Tiere genannt, die einerseits hinsichtlich des Besitzers und andererseits hinsichtlich einer biologischen Behandlung gekennzeichnet werden können, wobei die Kennzeichnungen auch zu unterschiedlichen Zeitpunkten angebracht werden können. Wie insbesondere das Beispiel des Automobillacks zeigt, ist die Anzahl der zu unterscheidenden Produktionseinheiten relativ gering, hier beispielsweise 365 für die Zahl der Tage oder 53 für die Zahl der Wochen eines Jahres. Andererseits ist aber bei diesem bekannten Verfahren für jeden zu kennzeichnenden Tag oder für jede zu kennzeichnende Woche ein individueller Mikropartikel-Code zu verwenden. Die Zahl der unterschiedlich codierten Mikropartikel entspricht damit der Zahl der zu kennzeichnenden Tage oder Wochen oder sonstigen Einheiten. Bei relativ niedrigen Zahlen ist ein solches Verfahren noch tragbar; wenn jedoch die Zahlen höhere Größenordnungen erreichen, wird ein derartiges Verfahren absolut unwirtschaftlich. Diese Unwirtschaftlichkeit wird insbesondere dadurch verursacht, daß häufig sehr große Stückzahlen von Produkten in einer Produktserie hergestellt werden und daß, wenn für jedes Produkt-Stück eine eigene Kennzeichnung gewünscht wird, dafür entsprechend viele unterschiedlich codierte Mikropartikel in einer jeweils allerdings nur sehr geringe Menge benötigt werden. Die Herstellung von sehr vielen verschieden codierten Mikropartikeln in jeweils sehr kleinen Mengen ist für den Hersteller der Mikropartikel sehr aufwendig und unwirtschaftlich. Auf der Seite der Anwender der Mikropartikel erfordert ein solches Verfahren einen sehr hohen Aufwand an Logistik für die Vorhaltung, Zuordnung und Anbringung oder Zugabe der Mikropartikel an/zu dem jeweils zugehörigen Produkt-Stück.

Für die vorliegende Erfindung stellt sich deshalb die Aufgabe, ein Verfahren der eingangs genannten Art zu schaffen, das die dargelegten Nachteile vermeidet und mit dem einzelne Produkte auch bei großen Produkt-Stückzahlen mit vertretbarem wirtschaftlichen und logistischen Aufwand gesichert und gekennzeichnet werden können. Außerdem soll das Verfahren dahingehend abgewandelt werden können, daß es auch für eine reine Numerierung von Produkten verwendet werden kann, wenn eine übergreifende Kennzeichnung, z.B. mit einem Hersteller-Code, nicht erforderlich oder nicht gewünscht ist.

Zur Lösung des ersten Teils der Aufgabe wird ein Verfahren der eingangs genannten Art vorgeschlagen, das dadurch gekennzeichnet ist,
- daß die zweite Mikropartikel-Gruppe durch die Einerund die Zehnerstelle einer Dezimalzahl darstellende Mikropartikel gebildet wird,
- daß eine ggf. vorgesehene dritte Mikropartikel-Gruppe durch die Hunderter- und die Tausenderstelle einer Dezimalzahl darstellende Mikropartikel gebildet wird,
- daß eine ggf. vorgesehene vierte Mikropartikel-Gruppe durch die Zehntausender- und die Hunderttausenderstelle einer Dezimalzahl darstellende Mikropartikel gebildet wird und
- daß für die Mikropartikel jeder Mikropartikel-Gruppe wenigstens eine eigene Gruppen-Kennfarbschicht verwendet wird.

Mit dem erfindungsgemäßen Verfahren wird vorteilhaft erreicht, daß neben einer übergreifenden, für eine Vielzahl von Produkten gleichen Information jedes einzelne Produkt-Stück mit einer individuellen Information versehen werden kann, ohne daß der Aufwand hierfür unwirtschaftlich hoch würde. Dadurch, daß jeweils zwei Dezimalstellen in einer Mikropartikel-Gruppe dargestellt werden, ergibt sich eine relativ geringe und damit wirtschaftlich vertretbare Anzahl von unterschiedlich codierten Mikropartikel-Gruppen, wobei sich dieser Vorteil bei zunehmend mehrstelligen Dezimalzahlen zunehmend positiv auswirkt. Mit der oben erwähnten zweiten Mikropartikel-Gruppe können alle Dezimalzahlen zwischen 0 und 99 dargestellt werden; mit der dritten Mikropartikel-Gruppe können zusätzlich die Hunderter- und die Tausenderstelle von Dezimalzahlen zwischen 100 und 9900 dargestellt werden, so daß bei Verwendung der zweiten und der dritten Mikropartikel-Gruppe mit 200 unterschiedlich codierten Mikropartikeln schon alle Zahlen zwischen 0 und 9999 darstellbar sind. Bei Bedarf kann der mit dem Verfahren darstellbare Zahlenbereich problemlos nach oben ausgebaut werden, wenn noch größere Zahlen dargestellt werden sollen. Jede zusätzliche Mikropartikel-Gruppe vergrößert dabei den darstellbaren Zahlenbereich um den Faktor 100, während sich die Zahl der unterschiedlich codierten Mikropartikel lediglich um 100 erhöht. Damit die Mikropartikel-Gruppen beim Anwender und bei einer späteren Decodierung voneinander unterschieden werden können, wird für jede Mikropartikel-Gruppe wenigstens eine eigene Gruppen-Kennfarbschicht verwendet. Anhand dieser Gruppen-Kennfarbschicht sind die Mikropartikel hinsichtlich ihrer Gruppenzugehörigkeit unterscheidbar und können leicht in das darzustellende Zahlensystem eingeordnet werden, so daß eine spätere Entschlüsselung der Codierung problemlos möglich ist. Damit lassen sich Produkte kombiniert sowohl z.B. nach Hersteller als auch nach einer Seriennummer mit dem erfindungsgemäßen Verfahren kennzeichnen, wobei die Zahl der dafür benötigten unterschiedlich codierten Mikropartikel-Gruppen in einem vertretbaren und problemlos handhabbaren Bereich bleibt.

Weiterhin ist bevorzugt vorgesehen, daß für die zweite und ggf. dritte und ggf. vierte Mikropartikel-Gruppe jeweils vierschichtige Mikropartikel verwendet werden, die neben der Gruppen-Kennfarbschicht zwei Ziffernfarbschichten sowie eine Trennfarbschicht zwischen den Ziffernfarbschichten enthalten, wobei die Farbe jeder Ziffernfarbschicht aus zehn verschiedenen Farben ausgewählt wird, die den Dezimalziffern 0 bis 9 entsprechen. Durch die Begrenzung der Zahl der Farbschichten auf vier Schichten ist die Herstellung dieser Mikropartikel mit einem relativ geringen Aufwand möglich. Außerdem besteht hier die Möglichkeit, die Mikropartikel der ersten Mikropartikel-Gruppe mit einer davon abweichenden Farbschichtzahl auszuführen und sie allein dadurch schon eindeutig von den Mikropartikeln der zweiten und gegebenenfalls weiteren Mikropartikel-Gruppe(n) unterscheidbar zu machen.

Eine weitere Vereinfachung der Herstellung sowie der Identifizierung und Decodierung der Mikropartikel wird dadurch erreicht, daß für die Gruppen-Kennfarbschicht und die Trennfarbschicht innerhalb jeder Mikropartikel-Gruppe die gleiche Farbe verwendet wird.

Zur Festlegung der Reihenfolge, in der die Farbschichten der Mikropartikel-Gruppen zu decodieren sind, ist bevorzugt vorgesehen, daß die Gruppen-Kennfarbschicht als äußere Schicht auf der äußeren Seite der die höhere Dezimalstelle darstellenden Ziffernfarbschicht angeordnet wird.

Für Einsatzfälle des Verfahrens, in denen beispielsweise ein Anwender besonders große Stückzahlen eines Produkts herstellt und kennzeichnen will oder der Anwender seine Produkte mit Nummernbereichen versehen will, die mehr als sechs Dezimalstellen umfassen, kann das Verfahren eine fünfte Mikropartikel-Gruppe verwenden, die durch Mikropartikel mit einer für die Darstellung der zusätzlichen Dezimalstelle(n) von über die Zahl 1.000.000 hinausgehenden Dezimalzahlen benötigten Schichtenzahl gebildet wird, wobei diese Mikropartikel wenigstens eine eigene Gruppen-Kennfarbschicht aufweisen und wobei deren Schichtenzahl vorzugsweise zwischen zwei und sechs liegt.

In weiterer Ausgestaltung kann die fünfte Mikropartikel-Gruppe neben oder anstelle der Darstellung einer oder mehrerer Dezimalstellen eine zusätzliche produktbezogene Information codiert darstellen.

Um die Decodierung der verschiedenen Mikropartikel zu erleichtern und um Fehler bei der Decodierung möglichst weitgehend auszuschließen, ist bevorzugt vorgesehen, daß die Ziffernfarbschichten durch Volltonfarben und die Kenn- und/oder Trennfarbschichten durch Pastell- und/oder Metallic- und/oder Fluoreszenzfarben gebildet werden. Eine weitere Erleichterung der Decodierung der Mikröpartikel kann dadurch erreicht werden, daß die Farben der Ziffernfarbschichten den Farben des international genormten Farbencodes für elektrische Widerstände entsprechend ausgewählt werden.

Zur Lösung des zweiten Teils der oben gestellten Aufgabe wird gemäß Anspruch 9 ein abgewandeltes Verfahren der vorstehend beschriebenen Art vorgeschlagen, das dadurch gekennzeichnet ist, daß es die erste Mikropartikel-Gruppe mit der für eine Vielzahl von Produkten gleichen Information nicht verwendet und daß es als reines Numerierungsverfahren für eine Numerierung, vorzugsweise eine fortlaufende Numerierung, von einzelnen Produkt-Stücken einer Produktserie verwendet wird. Diese Abwandlung des Verfahrens ermöglicht es, die einzelnen Produkt-Stücke einer Produktserie individuell zu numerieren, wobei auch eine fortlaufende Numerierung problemlos realisierbar ist.

Die Erfindung insgesamt bietet eine kostengünstige Möglichkeit, Produkte mit einer aufgrund der Winzigkeit der Mikropartikel nach außen nicht in Erscheinung tretenden Hersteller-Kennzeichnung und/oder individuellen Nummer zu versehen. Hierdurch ist später bedarfsweise, z.B. durch Polizei- oder Zollbehörden, eindeutig feststellbar, ob ein Produkt echt ist und ob ein Produkt mit einer sichtbaren Seriennummer, z.B. ein Kraftfahrzeug, noch die vom Hersteller vergebene und sichtbar angebrachte Original-Seriennummer trägt; wenn hier eine Fälschung durch Entfernen der ursprünglichen sichtbaren original-Seriennummer und Anbringung einer neuen Seriennummer erfolgt ist, läßt sich das schnell durch einen Vergleich der sichtbaren Seriennummer mit der in den Mikropartikeln codierten Seriennummer und deren Nicht-Übereinstimmung feststellen.

Diese hohe Fälschungssicherheit wird erreicht, weil die mittels des erfindungsgemäßen Verfahrens in Form der Mikropartikel an dem Produkt angebrachte Nummer durch Fälscher nicht entfernt und nicht durch eine neue Nummer ersetzt werden kann, denn die Mikropartikel sind sehr unauffällig und mit bloßem Auge nicht sichtbar und können an praktisch jeder beliebigen Stelle des Produkts angebracht werden, wobei die Anbringungsstelle nur dem Hersteller sowie mit Kontrollaufgaben betrauten Stellen bekannt ist. Zudem dürfte es für Fälscher praktisch unmöglich sein, geeignete Mikropartikel nachzumachen, weil deren Herstellung technisch aufwendig und schwierig ist.

Ein weiterer Vorteil des erfindungsgemäßen Verfahrens besteht darin, daß für Anwendungsfälle, bei denen keine Numerierung sondern nur eine Hersteller-Kennzeichnung durch Mikropartikel gewünscht ist, die Hersteller-Kennzeichnung durch eine Kombination von zwei Mikropartikel-Gruppen erfolgen kann. Zur Kennzeichnung verschiedener Hersteller kann eine identische erste Mikropartikel-Gruppe eingesetzt werden, wobei dann zusätzlich eine zweite oder noch weitere Mikropartikel-Gruppe in Kombination mit der ersten Mikropartikel-Gruppe verwendet wird. Dabei muß lediglich darauf geachtet werden, daß nicht zweimal die gleiche Kombination von erster Mikropartikel-Gruppe mit zweiter oder weiterer Mikropartikel-Gruppe vergeben wird. Für eine derartige Hersteller-Kennzeichnung von Produkten können Standard-Mikropartikel aus einem Vorrat eingesetzt werden, so daß nicht für jeden Hersteller, der das Verfahren einsetzen will, individuelle Mikropartikel hergestellt und vorgehalten werden müssen. Dies bedeutet eine erhebliche Steigerung der Wirtschaftlichkeit des Verfahrens, wodurch dieses auch für Anwendungen einsetzbar wird, bei denen bisher die Kosten ein Hindernis darstellten.

Zusammenfassend ist festzustellen, daß das erfindungsgemäße Verfahren in seinen Ausführungen und Abwandlungen sehr wirtschaftlich anwendbar ist, weil es einerseits für den Hersteller der Mikropartikel die unwirtschaftliche Produktion von Kleinstmengen von Mikropartikeln vermeidet und weil andererseits die Anwender des Verfahrens nur eine relativ geringe Zahl unterschiedlicher Mikropartikel vorhalten, zuordnen und am Produkt anbringen oder dem Produkt zugeben müssen.

## Patentansprüche

1. Verfahren zur Sicherung und Kennzeichnung von Produkten unter Verwendung von am Produkt anzubringenden oder dem Produkt zuzugebenden Mikropartikeln mit jeweils mehreren, einen Code bildenden Farbschichten, wobei für jedes einzelne Produkt zwei oder mehr verschieden codierte Mikropartikel-Gruppen verwendet werden, wobei die erste Mikropartikel-Gruppe eine für eine Vielzahl von Produkten gleiche Information und die zweite oder weitere Mikropartikel-Gruppe eine für jedes einzelne Produkt oder für jeweils wenige Produkte individuelle Information enthält,
**dadurch gekennzeichnet,**
- **daß** die zweite Mikropartikel-Gruppe durch die Einer- und die Zehnerstelle einer Dezimalzahl darstellende Mikropartikel gebildet wird,
- **daß** eine ggf. vorgesehene dritte Mikropartikel-Gruppe durch die Hunderter- und die Tausenderstelle einer Dezimalzahl darstellende Mikropartikel gebildet wird,
- **daß** eine ggf. vorgesehene vierte Mikropartikel-Gruppe durch die Zehntausender- und die Hunderttausenderstelle einer Dezimalzahl darstellende Mikropartikel gebildet wird, und
- **daß** für die Mikropartikel jeder Mikropartikel-Gruppe wenigstens eine eigene Gruppen-Kennfarbschicht verwendet wird.

2. Verfahren nach Anspruch 1, **dadurch gekennzeichnet, daß** für die zweite und ggf. dritte und ggf. vierte Mikropartikel-Gruppe jeweils vierschichtige Mikropartikel verwendet werden, die neben der Gruppen-Kennfarbschicht zwei Ziffernfarbschichten sowie eine Trennfarbschicht zwischen den Ziffernfarbschichten enthalten, wobei die Farbe jeder Ziffernfarbschicht aus zehn verschiedenen Farben ausgewählt wird, die den Dezimalziffern 0 bis 9 entsprechen.

3. Verfahren nach Anspruch 2, **dadurch gekennzeichnet, daß** für die Gruppen-Kennfarbschicht und die Trennfarbschicht innerhalb jeder Mikropartikel-Gruppe die gleiche Farbe verwendet wird.

4. Verfahren nach Anspruch 3, **dadurch gekennzeichnet, daß** die Gruppen-Kennfarbschicht als äußere Schicht auf der äußeren Seite der die höhere Dezimalstelle darstellenden Ziffernfarbschicht angeordnet wird.

5. Verfahren nach einem der Ansprüche 1 bis 4, **dadurch gekennzeichnet, daß** eine fünfte Mikropartikel-Gruppe verwendet wird, die durch Mikropartikel mit einer für die Darstellung der zusätzlichen Dezimalstelle(n) von über die Zahl 1.000.000 hinausgehenden Dezimalzahlen benötigten Schichtenzahl gebildet wird, wobei diese Mikropartikel wenigstens eine eigene Gruppen-Kennfarbschicht aufweisen und wobei deren Schichtenzahl vorzugsweise zwischen zwei und sechs liegt.

6. Verfahren nach Anspruch 5, **dadurch gekennzeichnet, daß** die fünfte Mikropartikel-Gruppe neben oder anstelle einer oder mehrerer Dezimalstellen eine zusätzliche produktbezogene Information codiert darstellt.

7. Verfahren nach einem der Ansprüche 2 bis 6, **dadurch gekennzeichnet, daß** die Ziffernfarbschichten durch Volltonfarben und die Kenn- und/oder Trennfarbschichten durch Pastell- und/oder Metallic- und/oder Fluoreszenzfarben gebildet werden.

8. Verfahren nach Anspruch 7, **dadurch gekennzeichnet, daß** die Farben der Ziffernfarbschichten den Farben des international genormten Farbencodes für elektrische Widerstände entsprechend ausgewählt werden.

9. Verfahren nach einem der vorangehenden Ansprüche, **dadurch gekennzeichnet, daß** es die erste Mikropartikel-Gruppe mit der für eine Vielzahl von Produkten gleichen Information nicht verwendet und daß es als reines Numerierungsverfahren für eine Numerierung, vorzugsweise eine fortlaufende Numerierung, von einzelnen Produkten einer Produktserie verwendet wird.

## Claims

1. Method for safeguarding and identifying products using microparticles, which are to be applied to the product or added to the product, having respectively a plurality of colour layers forming a code, two or more differently coded microparticle groups being used for each individual product, the first microparticle group containing the same information for a multiplicity of products and the second or further microparticle group containing information which is individual for each individual product and for respectively few products,
**characterised in that**
- the second microparticle group is formed by microparticles representing the units and the tens digit of a decimal number,
- a possibly provided third microparticle group is formed by the microparticles representing the hundreds and the thousands digit of a decimal number,
- a possibly provided fourth microparticle group is formed by microparticles representing the ten thousands and the hundred thousands digit of a decimal number and
- at least one separate group identification colour layer is used for the microparticles of each microparticle group.

2. Method according to claim 1, **characterised in that**, for the second and possibly third and possibly fourth microparticle group, respectively four-layered microparticles are used which, in addition to the group identification colour layer, contain two number colour layers and also a separation colour layer between the number colour layers, the colour of each number colour layer being selected from ten different colours which correspond to the decimal numbers 0 to 9.

3. Method according to claim 2, **characterised in that**, for the group identification colour layer and the separation colour layer within each microparticle group, the same colour is used.

4. Method according to claim 3, **characterised in that** the group identification colour layer is disposed as outer layer on the outer side of the number colour layer representing the higher decimal point.

5. Method according to one of the claims 1 to 4, **characterised in that** a fifth microparticle group is used which is formed by microparticles with a layer number required for the representation of the additional decimal point(s) of decimal numbers extending beyond the number 1,000,000, these microparticles having at least one separate group identification colour layer and their layer number preferably being between two and six.

6. Method according to claim 5, **characterised in that** the fifth microparticle group, in addition to or instead of one or more decimal points, represents additional product-related information in code.

7. Method according to one of the claims 2 to 6, **characterised in that** the number colour layers are formed by full tone colours and the identification and/or separation layers by pastel and/or metallic and/or fluorescent colours.

8. Method according to claim 7, **characterised in that** the colours of the number colour layers are selected corresponding to the colours of the internationally standard colour code for electrical resistors.

9. Method according to one of the preceding claims, **characterised in that** it does not use the first microparticle group with the same information for a multiplicity of products, and **in that** it is used as a pure numbering method for numbering, preferably progressive numbering, of individual products of a product series.

## Revendications

1. Procédé pour protéger et caractériser des produits moyennant l'utilisation de microparticules devant être appliquées sur le produit ou devant être ajoutées au produit et comportant respectivement plusieurs couches colorées formant un code, selon lequel pour chaque produit individuel on utilise deux ou plus de deux groupes différents codés de microparticules, le premier groupe de microparticules contenant une information identique pour une multiplicité de produits, et le second groupe ou d'autres groupes de microparticules contenant une information individuelle pour chaque produit individuel ou pour respectivement un petit nombre de produits,
**caractérisé en ce**
- **qu'**on forme le second groupe de microparticules au moyen de microparticules représentant le chiffre des unités et le chiffre des dizaines d'un nombre décimal,
- **qu'**on forme un troisième groupe éventuellement prévu de microparticules au moyen de microparticules représentant le chiffre des centaines et le chiffre des milliers d'un nombre décimal,
- **qu'**on forme un quatrième groupe de microparticules éventuellement prévues au moyen de microparticules représentant le chiffre des dizaines de milliers et le chiffre des centaines de milliers d'un nombre décimal, et
- **que** pour les microparticules de chaque groupe de microparticules on utilise au moins une couche colorée particulière de caractéristiques du groupe.

2. Procédé selon la revendication 1, **caractérisé en ce que** pour le second et éventuellement le troisième et éventuellement le quatrième groupes de microparticules, on utilise respectivement des microparticules à quatre couches, qui contiennent en dehors de la couche colorée caractéristique du groupe deux couches colorées de chiffres ainsi qu'une couche colorée de séparation entre les couches colorées de chiffres, la couleur de chaque couche colorée de chiffre étant sélectionnée parmi dix couleurs différentes, qui correspondent aux chiffres décimaux de 0 à 9.

3. Procédé selon la revendication 2, **caractérisé en ce que** pour la couche colorée caractéristique du groupe et la couche colorée de séparation à l'intérieur de chaque groupe de microparticules on utilise la même couleur.

4. Procédé selon la revendication 3, **caractérisé en ce que** la couche colorée caractéristique de groupe est disposée en tant que couche extérieure sur la face extérieure de la couche colorée de chiffre représentant le chiffre décimal le plus élevé.

5. Procédé selon l'une des revendications 1 à 4, **caractérisé en ce qu'**on utilise un cinquième groupe de microparticules, qui est formé par des microparticules comportant un nombre de couches nécessaire pour la représentation du ou des chiffres supplémentaires de nombreux décimaux allant au-delà du nombre 1 000 000, ces microparticules comportant au moins une couche colorée propre caractéristique de groupe et le nombre des couches de ces microparticules étant situé de préférence entre deux et six.

6. Procédé selon la revendication 5, **caractérisé en ce que** le cinquième groupe de microparticules représente, en dehors ou à la place d'un ou de plusieurs chiffres décimaux, une information supplémentaire rapportée au produit.

7. Procédé selon l'une des revendications 2 à 6, **caractérisé en ce que** les couches colorées de chiffres sont formées par des couleurs complètes et les couches colorées de caractérisation et/ou de séparation sont formées par des couleurs pastels et/ou des couleurs métallisées et/ou des couleurs fluorescentes.

8. Procédé selon la revendication 7, **caractérisé en ce que** les couleurs des couches colorées de chiffres sont sélectionnées de manière à correspondre aux codes de couleurs normalisés au niveau international pour des résistances électriques.

9. Procédé selon la revendication précédente, **caractérisé en ce qu'**on n'utilise pas le premier groupe de particules avec l'information identique pour une multiplicité de produits, et qu'on l'utilise comme pur procédé de numération pour une numération, de préférence une numération continue, des produits individuels d'une série de produits.
